# EUROPEAN PATENT APPLICATION

(11) **EP 4 534 495 A1**
(43) Date of publication of application: **09.04.2025**
(21) Application number: 23815826.5
(22) Date of filing: 19.05.2023
(51) Int. Cl.: C03C 17/30, B32B 17/10, G02B 5/02

(54) **LOW-REFLECTION MEMBER, AND COATING LIQUID FOR LOW-REFLECTION FILM**

(30) Priority: 01.06.2022 JP 2022089976
(71) Applicant: Nippon Sheet Glass Company, Limited, Tokyo 108-6321 (JP)
(72) Inventor: HAYASHI, Kiyomi, Tokyo 108-6321 (JP); SHIMAMURA, Yuki, Tokyo 108-6321 (JP)
(74) Representative: Mewburn Ellis LLP
(86) International application number: PCT/JP2023/018688
(87) International publication number: WO 2023/234067

(57) **Abstract**

A low-reflection member according to the present invention comprises: a glass plate having a first surface and a second surface; and a low-reflection film formed on the first surface and having a refractive index smaller than a refractive index of the glass plate, wherein the low-reflection film includes hollow fine particles and a binder, and the low-reflection film does not peel off even when a cotton swab is pressed against the low-reflection film with a load of at least 10 g and then swept once over a distance of 3 cm.

## Description

### Technical Field

The present invention relates to a low-reflection member, and a coating liquid for a low-reflection film.

### Background Art

There is a problem with a glass plate of a display of a personal computer, a smartphone, or the like that external light such as an indoor light and sunlight is reflected thereon, and visibility is reduced. To solve this problem, a low-reflection film is formed on a display (PTL 1).

### Citation List

### Patent Literature

PTL 1: Japanese Patent Laid-open Publication No. 2020-118992

### Summary of Invention

### Technical Problem

Since such a glass plate on which a low-reflection film is formed may be used in an environment such as outdoors, abrasion resistance performance has been demanded in recent years. The present invention has been devised to solve this problem, and an object thereof is to provide a low-reflection member having abrasion resistance performance and a coating liquid for a low-reflection film.

### Solution to Problem

Item 1. A low-reflection member including:
a glass plate having a first surface and a second surface; and
a low-reflection film formed on the first surface and having a refractive index smaller than a refractive index of the glass plate, in which
the low-reflection film includes:
   hollow fine particles; and
   a binder, and
   the low-reflection film does not peel off even when a cotton swab is pressed against the low-reflection film with a load of 10 g or more and then swept once over a distance of 3 cm.

Item 2. A low-reflection member including:
a glass plate having a first surface and a second surface; and
a low-reflection film formed on the first surface and having a refractive index smaller than the refractive index of the glass plate, in which
the low-reflection film includes:
   hollow fine particles; and
   a binder, and
   when a woven fabric is pressed against the low-reflection film with a load of 100 g and the woven fabric is reciprocated 10 times over a distance of 3 cm, a change in coefficient of kinetic friction is 0.2 or less.

Item 3. The low-reflection member according to item 1 or 2, in which
in the low-reflection film,
a mass ratio of the hollow fine particles to the binder is 50 : 50 to 99 : 1.

Item 4. The low-reflection member according to item 1 or 2, in which
in the low-reflection film,
a mass ratio of the hollow fine particles to the binder is 75 : 25 to 95 : 5.

Item 5. The low-reflection member according to any one of items 1 to 4, in which
the binder contains
silica and
polysilsesquioxane.

Item 6. The low-reflection member according to any one of items 1 to 5, in which the low-reflection member has a refractive index of less than 1.20.

Item 7. The low-reflection member according to any one of items 1 to 5, in which the low-reflection member has a refractive index of 1.18 or less.

Item 8. The low-reflection member according to any one of items 1 to 7, in which
a void having a sectional area of 1000 nm² or more is formed between the hollow fine particles.

Item 9. The low-reflection member according to any one of items 1 to 8, in which the binder contains a void having a sectional area of 700 nm² or less.

Item 10. The low-reflection member according to any one of items 1 to 9, in which the low-reflection film does not peel off even after a cotton swab is pressed against the low-reflection film with a load of 50 g or more and swept once over a distance of 3 cm.

Item 11. The low-reflection member according to any one of items 1 to 9, in which the low-reflection film does not peel off even after a cotton swab is pressed against the low-reflection film with a load of 100 g or more and swept once over a distance of 3 cm.

Item 12. The low-reflection member according to any one of items 1 to 11, in which the low-reflection member has a pencil hardness of higher than 2B.

Item 13. The low-reflection member according to any one of items 1 to 12, which can be used as an optical element housed inside a housing.

Item 14. The low-reflection member according to item 13, in which the optical element is a lens.

Item 15. The low-reflection member according to item 13, in which:
the optical element is a cover member; and
the low-reflection film is disposed to face toward the inside of the housing.

Item 16. A coating liquid for a low-reflection film to be applied onto a glass plate, the coating liquid including:
hollow fine particles;
a binder; and
a solvent having a boiling point of 200°C or higher.

### Advantageous Effects of Invention

According to the present invention, it is possible to provide a low-reflection member having abrasion resistance performance.

### Brief Description of Drawings

[Fig. 1] Fig. 1 is a sectional view illustrating one embodiment of a low-reflection member according to the present invention.
[Fig. 2] Fig. 2 is an enlarged sectional view of Fig. 1.
[Fig. 3] Fig. 3 is a view illustrating a jig to be used in a durability test.
[Fig. 4] Fig. 4 is an SEM photograph showing a sectional view of Example 1.
[Fig. 5] Fig. 5 is an SEM photograph showing a sectional view of Comparative Example.
[Fig. 6] Fig. 6 is an SEM photograph showing a sectional view of Example 2.
[Fig. 7] Fig. 7 is a graph showing changes in coefficient of kinetic friction in Examples 1 and 2 and Comparative Example.
[Fig. 8] Fig. 8 is SEM photographs showing a surface of Comparative Example before and after a test for measuring a change in coefficient of kinetic friction.

### Description of Embodiments

In the following, one embodiment of the low-reflection member according to the present invention will be described with reference to drawings. The low-reflection member according to the present embodiment can be used as a display of a personal computer, a mobile PC, a tablet PC, a smartphone, or the like, a cover member of such a display, an optical filter, or an optical element (for example, a lens and a cover member covering a lens) to be housed inside a housing. In addition, the low-reflection member according to the present embodiment can be used as optical elements for an in-vehicle camera, an in-vehicle sensor, a security camera, or the like.

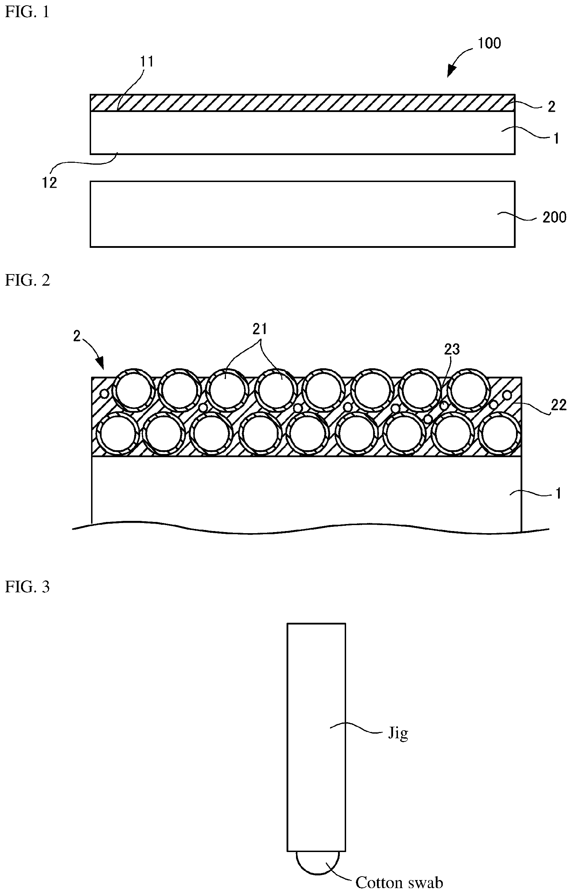

Fig. 1 is a sectional view of a low-reflection member. As illustrated in the drawing, the low-reflection member 100 according to the present embodiment includes a glass plate 1 having a first surface 11 and a second surface 12, and a low-reflection film 2 laminated on the first surface 11 of the glass plate 1. The low-reflection member 100 is disposed such that this covers a protected member 200 such as the display described above. At this time, the glass plate 1 is disposed with the second surface 12 thereof facing the protected member 200, and is disposed with the low-reflection film 2 facing toward the outside. Details will be described below.

### <1. Glass plate>

The glass plate 1 can be formed of, for example, general-purpose soda-lime glass, borosilicate glass, aluminosilicate glass, alkali-free glass, or other glass. The glass plate 1 can be formed by a float process. According to this manufacturing method, a glass plate 1 having smooth surfaces can be obtained. It is note that the glass plate 1 may have asperities on a principal surface, and may be, for example, figured glass. The figured glass can be formed by a manufacturing method called a roll-out process. The figured glass formed by this manufacturing method usually has periodic asperities in one direction along the principal surface of the glass plate.

In the float process, molten glass is continuously fed onto molten metal such as molten tin, and the fed molten glass is forced to flow on the molten metal, and thereby formed into a band form. The glass formed in this manner is referred to as a glass ribbon.

The glass ribbon is cooled as it runs toward the downstream, and when it is cooled and solidified, and then pulled up from the molten metal by a roller. Then, the glass ribbon is conveyed by the roller to an annealing oven, slowly cooled, and then cut. In this way, a float glass plate is obtained.

The glass plate 1 is not particularly limited in thickness, but to reduce the weight, it is preferred to be thinner. For example, the thickness is preferably 0.1 to 5 mm, and more preferably 0.1 to 2.5 mm. This is because when the glass plate 1 is excessively thin, the strength may decrease. If the glass plate 1 is excessively thick, distortion may occur in a protected member 200 viewed through the glass member 10.

The glass plate 1 may usually be a flat plate, but it may be a curved plate. In particular, when the shape of the surface of the protected member 200 to be protected is a non-flat surface such as a curved surface, the glass plate 1 preferably has a non-flat principal surface that conforming thereto. In this case, the glass plate 1 may be curved such that the entire of the glass plate 1 has a constant curvature, or may be locally bent. The principal surface of the glass plate 1 may be formed by connecting a plurality of flat surfaces to each other by curved surfaces, for example. The radius of curvature of the glass plate 1 may be set, for example, to 5000 mm or less. As to the lower limit of the radius of curvature, the radius of curvature may be set, for example, to 10 mm or more, but it may be further small especially at a site where the glass plate 1 is locally bent, and may be set, for example, to 1 mm or more.

A glass plate with the composition described below may be used. In the following, the indications with % that indicate components of the glass plate 1 all mean mol% unless otherwise specified. In the present description, the expression "be substantially constituted of" means that the total of the contents of the enumerated components accounts for 99.5 mass% or more, preferably 99.9 mass% or more, and more preferably 99.95 mass% or more. The expression "be substantially free of" means that the content of the component is 0.1 mass% or less, and preferably 0.05 mass% or less.

Examples of the glass that can be used for the glass plate 1 include absorptive glass (near-infrared absorption glass) prepared by adding CuO or the like to fluorophosphate-based glass, phosphate-based glass, or the like, soda-lime glass, borosilicate glass, alkali-free glass, and quartz glass. The "phosphate-based glass" shall include silicophosphate glass in which a part of the glass skeleton is composed of SiO₂.

The glass that can be used for the glass plate 1 may be one which has a high refractive index glass composition and, for example, in the indication with mol% on an oxide basis, which includes at least one selected from the group consisting of TiO₂, Ta₂O₅, WO₃, Nb₂O₅, ZrO₂ and Ln₂O₃ (Ln is at least one selected from the group consisting of Y, La, Gd, Yb and Lu), which are high refractive index components, in an amount of 30% to 80%, and SiO₂ and B₂O₃, which are glass skeleton components, in a total amount of 20% to 70%, and in which when alkaline earth metal components (MgO, CaO, SrO, BaO) are contained, BaO is contained among alkali metal components in a proportion of 0.5 or less.

Furthermore, the glass plate 1 can be obtained by molding molten glass into a plate form by a molding method such as a float process, a fusion process, or a roll-out process. The glass plate 1 can be obtained by once molding molten glass into a block form, and then processing the resulting glass by a redrawing method or the like. In addition, the glass plate 1 can be produced by using means such as reheat press molding or precise press molding. That is, a lens preform for mold press molding is prepared from optical glass, the lens preform is subjected to reheat press molding, and then subjected to grind processing, and thus a glass molded article can be prepared. Alternatively, a lens preform prepared by, for example, grind processing is subjected to precise press molding, and thus a glass molded article can be prepared. The means for preparing the glass plate 1 is not limited to these means.

On the basis of a composition of float sheet glass which is widely used as a glass composition suitable for the production of a glass plate by a float process (hereinafter, the composition of a float sheet glass is sometimes called "SL in the restricted sense" or simply "SL"), the present inventors studied a composition capable of improving the chemical strengthening characteristics of the SL in the restricted sense while approximating the characteristics such as T₂ and T₄ to the SL in the restricted sense as much as possible within a composition range regarded by those skilled in the art as soda-lime silicate glass suited for the float process (hereinafter, sometimes called "SL in a broad sense"), specifically, in a range in mass% as given below.
SiO₂ 65 to 80%
Al₂O₃ 0 to 16%
MgO 0 to 20%
CaO 0 to 20%
Na₂O 10 to 20%
K₂O 0 to 5%

The lithium aluminosilicate glass of the present invention preferably has the following composition (mass%):
SiO₂ 63 to 84%
Al₂O₃ 0 to 8%
B₂O₃ 5 to 18%
(Li₂O + Na₂O + K₂O) 3 to 14%
(MgO + CaO + SrO + BaO + ZnO) 0 to 12%
ZrO₂ 0 to 4%
P₂O₅ 0 to 2%

### (Density (specific gravity): d)

Taking into account of the composition given above, in the present embodiment, the density of the glass plate 1 can be reduced to 2.53 g·cm⁻³ or less, or to 2.51 g·cm⁻³ or less, or in some cases, to 2.50 g·cm⁻³ or less.

In the float process, and the like, when the difference in density among glass types is large, when the glass type to be produced is switched, molten glass higher in density stays at the bottom of a melting kiln, so that the switching of type may be hindered. Soda-lime glass, which is currently mass-produced by the float process, has a density of about 2.50 g·cm⁻³. Therefore, taking account of mass-production by the float process, the density of the glass plate 1 is preferably close to the value mentioned above, specifically, is preferably 2.45 to 2.55 g·cm⁻³, particularly preferably 2.47 to 2.53 g·cm⁻³, and more preferably 2.47 to 2.50 g·cm⁻³.

### (Elastic modulus: E)

When chemical strengthening involving ion exchange is performed, warpage may occur in a glass substrate. To suppress the warpage, the elastic modulus of the glass plate 1 is preferably high. According to the present invention, the elastic modulus (Young's modulus: E) of the glass plate 1 can be increased to 70 GPa or more, or to 72 GPa or more.

Hereinafter, the chemical strengthening of the glass plate 1 will be described.

### (Conditions of chemical strengthening, and compressive stress layer)

Chemical strengthening of the glass plate 1 according to the present invention can be performed by bringing the glass plate 1 containing sodium into contact with a molten salt containing a monovalent positive ion larger in ionic radius than a sodium ion, preferably containing a sodium ion, and performing ion exchange treatment of replacing sodium ions in the glass plate 1 with the aforementioned monovalent positive ions. As a result, a compressive stress layer with a surface to which a compressive stress is provided is formed.

Examples of the molten salt typically include potassium nitrate. Although a mixed molten salt of potassium nitrate with sodium nitrate may be used, a molten salt of potassium nitrate alone is preferred because it is difficult to control the concentration of the mixed molten salt.

The surface compressive stress and the depth of the compressive stress layer in the strengthened glass member can be controlled not only by the glass composition of the article, but also by the temperature of the molten salt and the treatment time in the ion exchange treatment.

By bringing the glass plate 1 described above into contact with a potassium nitrate molten salt, it is possible to obtain a strengthened glass member in which a surface compressive stress is extremely high and a compressive stress layer is extremely deep. Specifically, it is possible to obtain a strengthened glass member in which the surface compressive stress is 700 MPa or more and the depth of the compressive stress layer is 20 µm or more, and also possible to obtain a strengthened glass member in which the depth of the compressive stress layer is 20 µm or more and the surface compressive stress is 750 MPa or more.

When a glass plate 1 having a thickness of 3 mm or more is used, not chemical strengthening but air cooling strengthening can be used as a common strengthening method. The strengthening treatment is commonly performed for a cover member, but is not essential depending on the intended application or required characteristics. The strengthening treatment is often performed prior to functional film formation (described later), but may be performed after the functional film formation as long as the development of the function of the functional film is not hindered.

### <2. Low-reflection film>

### <2-1. Composition of low-reflection film>

Next, the low-reflection film will be described with reference to Fig. 2. Fig. 2 is a sectional view of a low-reflection film. As illustrated in Fig. 2, the low-reflection film 2 includes hollow fine particles 21 and a binder 22. The binder 22 is formed mainly of silica and polysilsesquioxane, and binds the hollow fine particles 21.

### <2-1-1. Binder>

The content of the polysilsesquioxane in the binder 22 is, for example, 30 to 70 mass%, preferably 40 to 70 mass%, and more preferably 50 to 60 mass%. The content of the polysilsesquioxane in the binder 22 can be determined by, for example, a spectroscopic method such as Fourier-transform infrared spectroscopy (FT-IR) or Si-NMR, a chemical method by elemental analysis, or a thermal analysis method such as thermogravimetry (TG).

The silica forming the binder 22 is formed by, for example, hydrolysis and dehydration condensation of a tetrafunctional alkoxysilane. The polysilsesquioxane forming the binder 22 is formed by, for example, hydrolysis and dehydration condensation of a trifunctional alkoxysilane. Thus, the binder 22 is formed by, for example, utilizing a sol-gel method. Thus, the binder 22 is likely to have a dense structure.

The polysilsesquioxane forming the binder 22 is, for example, a polysilsesquioxane in which an alkyl group having 16 or less, preferably 1 to 5 carbon atoms is bonded to a silicon atom. In this case, the binder 22 tends to be dense, and the binder 22 can exhibit an appropriate water repellent action. Thus, zinc oxide-containing composite particles 1 more reliably have high acid resistance and have long-term stability even when being in contact with water. In addition, the zinc oxide-containing composite particles 1 can be more reliably dispersed well in water. The alkyl group may be either linear or branched.

The polysilsesquioxane forming the binder 22 desirably includes at least one polysilsesquioxane selected from the group consisting of polymethylsilsesquioxane, polyethylsilsesquioxane, and polypropylsilsesquioxane. Polymethylsilsesquioxane is a polysiloxane having a basic constitutional unit in which one methyl group is bonded to one silicon atom. Polyethylsilsesquioxane is a polysiloxane having a basic constitutional unit in which one ethyl group is bonded to one silicon atom. Polypropylsilsesquioxane is a polysiloxane having a basic structural unit in which one 1-propyl group or one 2-propyl group is bonded to one silicon atom. As the polysilsesquioxane, for example, methyltriethoxysilane may be used.

The binder 22 may contain at least one of a void 23 having a sectional area of 700 nm² or less and a plurality of voids 23 having a sectional area of 1000 nm² or more. The number of the voids 23 having a sectional area of 1000 nm² or more may be 10 voids/µm² or less per 1 µm² of a sectional area of the binder 22.

### <2-1-2. Hollow fine particles>

The hollow fine particles 21 are not particularly limited as long as they have a hollow structure, and have, for example, a spherical shape, a cylindrical shape, or a sheet-like shape. The hollow fine particles 21 have, for example, an average particle diameter (primary particle diameter) of 10 to 150 nm. Owing to this configuration, the hollow fine particles 21 are readily dispersed uniformly in the low-reflection film 2. The average particle diameter of the hollow fine particles 21 can be determined, for example, by arithmetically averaging the particle diameters of 50 or more hollow fine particles 21 observed using a transmission electron microscope (TEM) or a scanning electron microscope (SEM). The particle diameter of each particle means the maximum diameter.

The hollow fine particles 21 desirably have an average particle diameter of 20 to 100 nm, and more desirably have an average particle diameter of 30 to 70 nm. The maximum dimension of an internal space in the hollow fine particles 21 is, for example, 5 to 100 nm, desirably 10 to 70 nm, and more desirable 20 to 50 nm. The hollow fine particles 21 are desirably monodisperse particles having a coefficient of variation of 0.1 or less.

The material of the hollow fine particles 21 may be, for example, an inorganic material or an organic material as long as the material has a refractive index of 1.15 to 2.70. The material of the hollow fine particles 21 is desirably a material having a refractive index of 1.20 to 2.00, more desirably a material having a refractive index of 1.18 to 1.40, and still more desirably a material having a refractive index of 1.20 to 1.35. From the viewpoint of resistance to deformation against external force, the hollow fine particles 21 are desirable made of an inorganic material. In this case, the hollow fine particles 21 are made of, for example, at least one selected from the group consisting of silica, magnesium fluoride, alumina, aluminosilicate, titania, and zirconia.

In particular, to provide an antireflection structure having high antireflection performance by low refractive index coating using the low-reflection film 2, the hollow fine particles 21 are desirably made of silica or magnesium fluoride. The refractive index of silica is 1.46, and the refractive index of magnesium fluoride is 1.38.

The structure and the material of the hollow fine particles 21 are determined such that the hollow fine particles 21 have a desired refractive index. For example, the material of the hollow fine particles 21 and a proportion accounted for by internal spaces based on the entire volume of the hollow fine particles 21 are determined such that the hollow fine particles 21 have a desired refractive index.

The refractive index of the hollow fine particles 21 can be measured by, for example, an immersion method (Becke's line method). For example, when the hollow fine particles 21 are made of silica, the refractive index of the hollow fine particles 21 can be measured in accordance with the following procedure. (i) The dispersion medium of the dispersion of the hollow fine particles 21 is evaporated and dried to afford a powder. (ii) The powder obtained in (i) is mixed with various standard refractive index liquids differing in refractive index, such as Series A and Series AA manufactured by GARGILL Laboratories. (iii) The refractive index of a standard refractive index liquid used when a mixed liquid obtained in (ii) has become transparent is determined to be the refractive index of the hollow fine particles 21.

The hollow fine particles 21 may be a commercially available product or may be a product prepared by a prescribed method. For example, the hollow fine particles 21 may be prepared by forming shells around cores and then removing the cores. For example, shells made of silica or shells made of magnesium fluoride are formed around polymer cores having a particle diameter of several tens of nanometers. Thereafter, the polymer cores are removed by dissolution in a solvent or combustion, and hollow fine particles 21 which are hollow silica particles or hollow magnesium fluoride particles can thereby be obtained. Alternatively, hollow fine particles 21 which are hollow magnesium fluoride particles can be obtained by forming shells made of magnesium fluoride around cores made of silica, and then dissolving the cores made of silica with an alkali.

### <2-1-3. Mass ratio of hollow fine particles to binder>

In the low-reflection film 2, the ratio (Wb : Wh) of the mass Wb of the binder 22 to the mass Wh of the hollow fine particles 21 is, for example, preferably 50 : 50 to 99 : 1, more preferably 75 : 25 to 98 : 2, and particularly preferably 75 : 25 to 95 : 5.

For example, when the mass ratio of the binder 22 is small, the refractive index decreases and the low-reflection glare performance is improved because many of the hollow fine particles 21 are possibly exposed from the low-reflection film 2 after the film formation, but the abrasion resistance may deteriorate because the function to bind the hollow fine particles 21 deteriorates. On the other hand, when the mass ratio of the binder 22 is large, abrasion resistance performance is improved because the function to bind the hollow fine particles 21 is improved, but the refractive index increases and the low-reflection function deteriorates because the hollow fine particles 21 are buried in the low-reflection film 2. From this viewpoint, the mass ratio of the binder 22 is preferably set as described above.

The thickness of the low-reflection film 2 is not particularly limited, and can be set to 50 to 100 nm, for example, as long as the above-described mass ratio of the binder 22 to the hollow fine particles 21 is attained.

The low-reflection film 2 of the present invention is not limited to one directly laminated on the glass plate 1. For example, there may be an underlayer made of SiO₂, TiO₂, MgO₂, or the like between the glass plate 1 and the low-reflection film 2. The underlayer can be laminated by a vapor deposition method, a sputtering method, a spray coating method, or a dip coating method, but the lamination method is not limited to these methods.

### <2-2. Method for manufacturing low-reflection film>

The low-reflection film 2 is, for example, a cured product obtained by curing a prescribed liquid composition (coating liquid). The liquid composition mainly contains the hollow fine particles 21, silica, polysilsesquioxane, and a solvent.

The coating liquid for a low-reflection film may be applied by various methods such as spin coating, roll coating, and spray coating. After the application, heat treatment is performed at 200°C or higher, and thus the low-reflection film 2 is formed. Therefore, the solvent may contain a solvent having a boiling point of 200°C or higher.

As such a solvent having a boiling point of 200°C or higher, for example, glycerin or 1,3-butanediol can be used, and such a solvent is preferably contained in the coating liquid in an amount of 30 to 80% by weight. In addition to the solvent having a high boiling point, propylene glycol monomethyl ether (PGME), methyl ethyl ketone, toluene, methyl isobutyl ketone, or the like may be mixed in the coating liquid.

### <3. Performance of low-reflection film>

### <3-1. Optical performance of low-reflection film>

To exert sufficient low-reflection performance, the refractive index of the low-reflection film 2 is preferably, for example, less than 1.20, and more preferably 1.16 or less. Voids in the binder 22 described above contribute to such a low refractive index. For measurement of a refractive index, a spectrophotometer (manufactured by Hitachi High-Tech Corporation; product name: U-4000) was used. The reflectance is measured in each of Examples and Comparative Examples, the refractive index of a low-refractive index film according to each of the Examples and the Comparative Examples is determined in accordance with reflectance spectrometry.

### <3-2. Abrasion resistance performance of low-reflection film>

As an abrasion resistance test, a cotton swab hand wiping method described below was used. As illustrated in Fig. 3, a rod-like jig having a tip with a cotton swab attached thereto was placed perpendicularly to a low-reflection film. Then, the jig was pressed against the low-reflection film with a prescribed load, and was reciprocated a prescribed number of times. Then, the coefficient of kinetic friction was measured, and the surface property of the low-reflection film was observed. As the cotton swab, a cotton swab for industrial use (P3D-100) manufactured by J.C.B. Industry Limited was used.

### <3-2-1. Cotton swab hand wiping method; "Single Abrasion Method" Observation of peeling after hand wiping>

In this cotton swab hand wiping method, a cotton swab was pressed against a low-reflection film with prescribed loads, namely, no weight, 1 g, 6 g, 20 g, 50 g, 100 g, 150 g, 200 g, and 300 g, and was swept once over a distance of 3 cm. At this time, in the case where the low-reflection film is not peeled off, this is evaluated as OK. In addition, when the cotton swab is pressed against the low-reflection film with the loads and swept once over a distance of 3 mm, and in the case where the low-reflection film is peeled off, a load next lighter than the load with which the peeling-off occurred is then measured, and the measured load is defined as a "abrasion resistance load."

### <3-2-2. Cotton swab hand wiping method; Change in coefficient of kinetic friction between before and after hand wiping>

In addition, in the cotton swab hand wiping method, when a cotton swab is pressed against a low-reflection film with a load of 100 g and then was reciprocated 10 times over a distance of 3 cm, the change in coefficient of kinetic friction between the first reciprocation and the tenth reciprocation is 0.2 or less, and preferably is 0.1 or less. The rate of change in coefficient of kinetic friction (the change defined above/the coefficient of kinetic friction at the first reciprocation) is preferably 40% or less.

### <4. Features>

The low-reflection member 100 according to the present embodiment can achieve the following effects.
(1) Since the hollow fine particles 21 are contained in the low-reflection film 2, a low refractive index is attained, so that a low-reflection performance can be improved.
(2) Since the ratio (Wb : Wh) of the mass Wb of the binder 22 to the mass Wh of the hollow fine particles 21 is adjusted as described above, it is possible to achieve both low reflection performance and abrasion resistance performance.
(3) Since the solvent having a high boiling point is contained in the coating liquid, the solvent having a high boiling point is evaporated after the advance of a sol-gel polycondensation reaction occurring in the formation of the low-reflection film 2. Thus, the abrasion resistance of the low-reflection film 2 is improved. In addition, due to the evaporation of the solvent after the advance of the sol-gel polycondensation reaction, the voids described above are formed.

### Examples

Hereinafter, Examples of the present invention will be described. However, the present invention is not limited to the following Examples.

### (1) Preparation of Examples and Comparative Example

The low-reflection members according to Example and Comparative Examples were each formed by laminating a low-reflection film on a glass plate (D263 manufactured by SCHOTT) having a thickness of 0.21 mm and a size of 76 mm × 76 mm.

The coating liquids having the compositions given in Table 1 were prepared (unit: mass%). The entire amount of each coating liquid was set to 1.0 g.

**[Table 1]**

| | Silica (binder) | Methyltriethoxys ilane (binder) | Silica hollow fine particles | Level ing agent | PGME (solvent) | Glycerin (solvent) |
|---|---|---|---|---|---|---|
| Example 1 | 17.91 | 10.02 | 70.74 | 1.33 | 50.0 | 50.0 |
| Comparative Example | 4.31 | 2.41 | 91.56 | 1.72 | 100.0 | - |
| Example 2 | 17.91 | 10.02 | 70.74 | 1.33 | 100.0 | - |

| | | | | | | |
|---|---|---|---|---|---|---|
| · Silica (binder): Ethyl orthosilicate (manufactured by Tama Chemicals Co., Ltd.) · Methyltriethoxysilane (MTES) (binder): KBE-13 (manufactured by Shin-Etsu Silicone Co., Ltd.) · Silica hollow fine particles: THRULYA (manufactured by JGC Catalysts and Chemicals Ltd.) · Leveling agent: KP341 (manufactured by Shin-Etsu Silicone Co., Ltd.) · PGME (solvent): 1-Methoxy-2-propanol (manufactured by Tokyo Chemical Industry Co., Ltd.) · Glycerin (solvent): Glycerin (manufactured by Hayashi Pure Chemical Ind., Ltd.) | | | | | | |

Next, the coating liquid was applied by flow coating onto a glass plate so as to have a thickness of about 100 nm, naturally dried for 10 minutes, then heated for 10 minutes in an oven set at 200°C, and thus a low-reflection film was formed. In this way, the low-reflection members according to Examples 1, 2 and Comparative Example were completed.

### (2) Evaluation

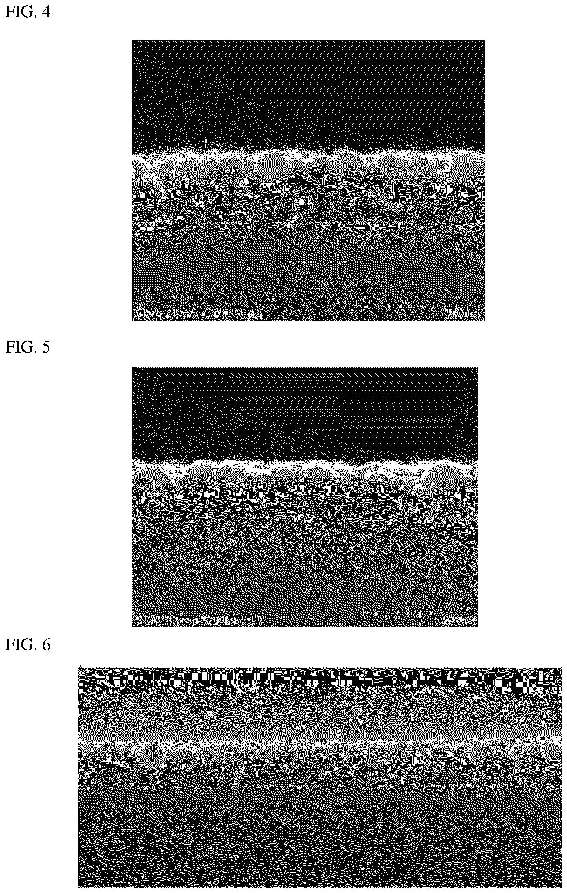

A section of the low-reflection film of each of Examples 1 and 2 and Comparative Example was photographed by SEM. Fig. 4 illustrates Example 1, Fig. 5 illustrates Example 2, and Fig. 6 illustrates Comparative Example. In Examples 1 and 2, it is well understood that gaps between the hollow fine particles are filled with the binder, and the hollow fine particles are sufficiently bound together. On the other hand, in the comparative example, many gaps between the hollow fine particles are observed, and it is found that the hollow fine particles are not sufficiently bound by the binder.

In addition, the following tests were performed for the low-reflection members of Examples 1 and 2 and Comparative Example. The results are as shown in Table 2.

### (2-1) Optical characteristics

The refractive index was measured by the method described above.

### (2-2) Abrasion resistance test

As an abrasion resistance test, the cotton swab hand wiping method described above was employed, and the abrasion resistance load and the change in coefficient of kinetic friction were measured. The results are as follows.

**[Table 2]**

| | Refractive index | Abrasion resistance | |
|---|---|---|---|
| | | Abrasion resistance load (g) | Change in coefficient of kinetic friction |
| Example 1 | 1.18 | 150 | 0.12 |
| Comparative Example | 1.16 | 0 | 0.28 |
| Example 2 | 1.20 | 200 | 0 |

As shown in Table 1, although glycerin is contained in the solvent in Example 1, the compositions of the solid components of Examples 1 and 2 are the same. As shown in Table 2, since glycerin is contained in the solvent in Example 1, it is possible to perform treatment at a high temperature, and the refractive index is lowered as compared with Example 2. However, the abrasion resistance load is low as compared with Example 2. On the other hand, in Comparative Example, because the hollow fine particles are less dense therebetween. Therefore, although the refractive index was low, the abrasion resistance was low and the low-reflection film was peeled off even with a load of 1 g (that is, the result was 0 g). In both Examples 1 and 2, the abrasion resistance load is 100 g or more. That is, each of the low-reflection films does not peel off even after a cotton swab is pressed against the low-reflection film with a load of 100 g or more and swept once over a distance of 3 cm. Therefore, it has been found that the low-reflection films have high abrasion resistance performance.

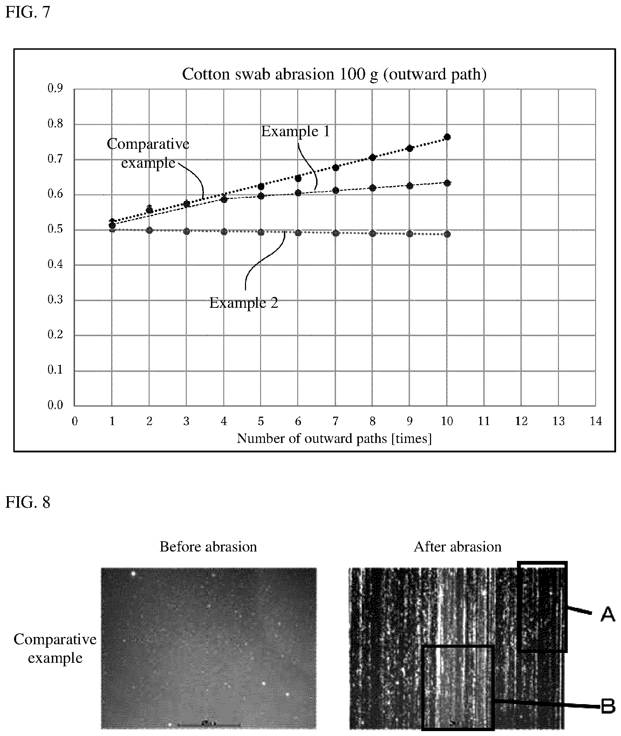

The transition of the change in coefficient of kinetic friction is shown in Fig. 7. As shown in Fig. 7, in Example 2, there was almost no change in coefficient of kinetic friction even though the cotton swab was reciprocated 10 times. On the other hand, in Example 1 and Comparative Example, as the number of reciprocations of a cotton swab increases, the coefficient of kinetic friction increases. In Example 1, however, when the number of reciprocations exceed five, the degree of the increase of the coefficient of kinetic friction decreases, and the change after 10 reciprocations is smaller than 0.20. In Comparative Example, the coefficient of kinetic friction continues to increase, and the change after 10 reciprocations is 0.28. As the coefficient of kinetic friction increases, the low-reflection film may be scratched and peeled. In particular, it has been confirmed that when the change in coefficient of kinetic friction exceeds 0.20, the low-reflection film peels off as described below.

Fig. 8 shows enlarged views of the low-reflection film before abrasion and after abrasion in Comparative Example in the measurement of the change in coefficient of kinetic friction. The region B rich in white color shown in Fig. 8 indicates that the low-reflection film remains although some scratches are generated. On the other hand, in the region A rich in dark color, not the low-reflection film but the glass plate is reflected. That is, it indicates that the low-reflection film has peeled off from the glass plate and does not remain. On the other hand, although depiction is omitted, the low-reflection films remained in Examples 1 and 2. Accordingly, it has been found that the change in coefficient of kinetic friction is preferably 0.20 or less.

### Reference Signs List

1 Glass plate
2 Low-reflection film
21 Hollow fine particle
22 Binder
100 Low-reflection member
200 Protected member

## Claims

1. A low-reflection member comprising:
a glass plate having a first surface and a second surface; and
a low-reflection film formed on the first surface and having a refractive index smaller than a refractive index of the glass plate, wherein
the low-reflection film includes:
hollow fine particles; and
a binder, and
the low-reflection film does not peel off even when a cotton swab is pressed against the low-reflection film with a load of 10 g or more and then swept once over a distance of 3 cm.

2. A low-reflection member comprising:
a glass plate having a first surface and a second surface; and
a low-reflection film formed on the first surface and having a refractive index smaller than the refractive index of the glass plate, wherein
the low-reflection film includes:
hollow fine particles; and
a binder, and
when a woven fabric is pressed onto the low-reflection film with a load of 100 g and the woven fabric is reciprocated 10 times over a distance of 3 cm, a change in coefficient of kinetic friction between a first reciprocation and a tenth reciprocation is 0.2 or less.

3. The low-reflection member according to claim 1 or 2, wherein
in the low-reflection film,
a mass ratio of the hollow fine particles to the binder is 50 : 50 to 99 : 1.

4. The low-reflection member according to claim 1 or 2, wherein
in the low-reflection film,
a mass ratio of the hollow fine particles to the binder is 70 : 30 to 95 : 5.

5. The low-reflection member according to claim 1 or 2, wherein
the binder contains
silica and
polysilsesquioxane.

6. The low-reflection member according to claim 1 or 2, wherein the low-reflection member has a refractive index of less than 1.20.

7. The low-reflection member according to claim 1 or 2, wherein the low-reflection member has a refractive index of 1.18 or less.

8. The low-reflection member according to claim 1 or 2, wherein a void having a sectional area of 1000 nm² or more is formed between the hollow fine particles.

9. The low-reflection member according to claim 1 or 2, wherein the binder contains a void having a sectional area of 700 nm² or less.

10. The low-reflection member according to claim 1 or 2, wherein the low-reflection film does not peel off even after a cotton swab is pressed against the low-reflection film with a load of 50 g or more and swept once over a distance of 3 cm.

11. The low-reflection member according to claim 1 or 2, wherein the low-reflection film does not peel off even after a cotton swab is pressed against the low-reflection film with a load of 100 g or more and swept once over a distance of 3 cm.

12. The low-reflection member according to claim 1 or 2, wherein the low-reflection member has a pencil hardness of higher than 2B.

13. The low-reflection member according to claim 1 or 2, which can be used as an optical element housed inside a housing.

14. The low-reflection member according to claim 13, wherein the optical element is a lens.

15. The low-reflection member according to claim 13, wherein:
the optical element is a cover member; and
the low-reflection film is disposed to face toward the inside of the housing.

16. A coating liquid for a low-reflection film to be applied onto a glass plate, the coating liquid comprising:
hollow fine particles;
a binder; and
a solvent having a boiling point of 200°C or higher.
